# EUROPEAN PATENT APPLICATION

(11) **EP 2 444 190 A1**
(43) Date of publication of application: **25.04.2012**
(21) Application number: 11185579.7
(22) Date of filing: 18.10.2011
(51) Int. Cl.: B23K 9/04, B23P 6/04

(54) **Build-up welding method and structural material**

(30) Priority: 19.10.2010 JP 2010234491
(71) Applicant: Kabushiki Kaisha Toshiba, Tokyo 105-8001 (JP)
(72) Inventor: Kamimura, Kenji, Tokyo, 105-8001 (JP); Asai, Satoru, Tokyo, 105-8001 (JP); Kondo, Tadashi, Tokyo, 105-8001 (JP); Tashima, Tsuguhisa, Tokyo, 105-8001 (JP)
(74) Representative: HOFFMANN EITLE

(57) **Abstract**

Capabilities of suppressing erosion caused by liquid droplets and achieving a short operation period and cost reduction are provided. A build-up welding method for a structural material used in an erosive environment includes: removing a portion exposed to the erosive environment from the structural material; and forming a hard layer in a portion of the structural material, from which the portion exposed to the erosive environment is removed, the hard layer being formed by short circuiting transfer gas metal arc welding using a solid wire with a hardness of HV 400 or more.

## Description

### CROSS-REFERENCE TO RELATED APPLICATION

This application is based upon and claims the benefit of priority from Japanese Patent Application No. 2010-234491, filed on October 19, 2010; the entire contents of which are incorporated herein by reference.

### FIELD

The present invention relates to a build-up welding method of preventing erosion of a structural material such as a turbine blade in an erosive environment, and to a structural material.

### BACKGROUND

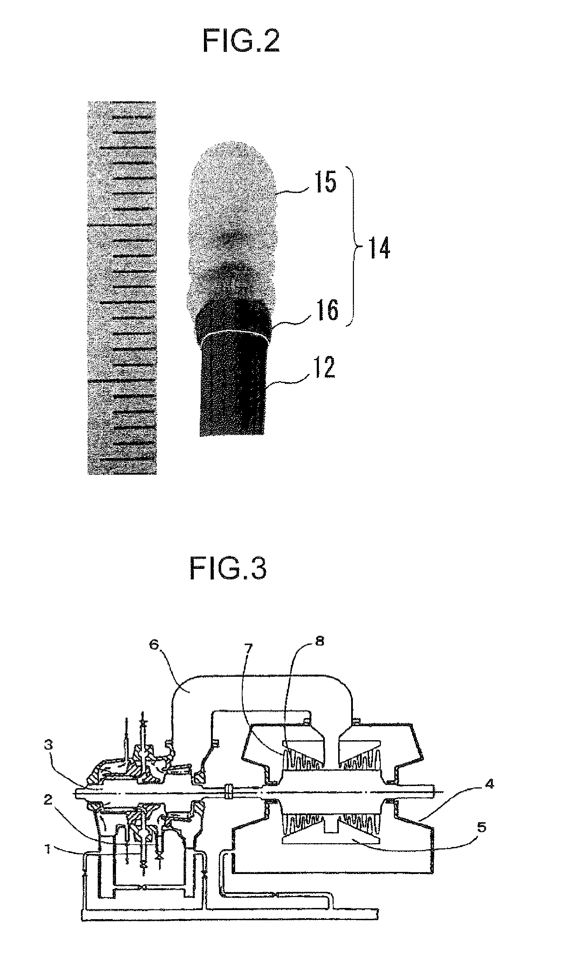

FIG. 3 is an overall configuration view of a general steam turbine. This steam turbine includes a main steam pipe 1, a reheat steam pipe 2, a turbine rotor 3, a low-pressure outer casing 4, a cross-over pipe 6, and the like. A low-pressure inner casing 5 is housed in the low-pressure outer casing 4. turbine moving blades 7 and turbine stator blades are disposed on the inside of the low-pressure inner casing 5.

The turbine moving blades 7 and the turbine stator blades are under an erosive environment susceptible to erosion caused by water droplets contained in the steam and by fine dust from oxide scale. As a material used for a large-size blade in the final stage, generally, an iron-base material containing Cr and Mo and excellent in strength is used. However, even when such a hard blade material having high ductile toughness is used, erosion can be caused by liquid droplets contained in the working steam depending on turbine operating conditions. Such erosion by liquid droplets has been a dominant factor on the lifetime of the turbine blade.

In the past, as countermeasures against erosion of a turbine blade that is caused by liquid droplets, a technique of reducing the influence due to erosion has been used by performing local flame-hardening or bonding a plate formed of a hard cobalt-base material typified by Stellite to a part of the blade by brazing or welding.

However, the method using local flame-hardening is a local hardening method using martensitic transformation of steel, and therefore local hardening cannot be caused in a steel material such as 17-4PH., the strength of which is increased by precipitation hardening.

Further, in the technique of bonding a plate formed of a hard cobalt-base material containing cobalt typified by Stellite (registered trademark, the same holds true below) as a main component, chromium, tungsten, and the like to a part of a blade by brazing or welding, concerns are rising that strength of precipitation hardened steel is significantly lowered due to a thermal influence at a time of welding or bonding, in addition to costs of the Stellite plate material and low availability in a long-term delivery period or the like.

On the other hand, a technique of providing Stellite powder to layer on a part of a blade by laser welding is proposed (see for example JP-A 2008-93725). By the technique, the thermal influence due to welding is minimized and aging treatment is performed after welding, with the result that build-up welding using Stellite can be performed without lowering the strength of the precipitation hardened steel.

In the above-mentioned build-up welding method performed using Stellite powder by laser welding, however, there have been problems that an amount of Stellite to be provided per unit time is small, and for application thereof to a large-size turbine blade, operation processes are prolonged and costs are increased.

### BRIEF DESCRIPTION OF THE DRAWINGS

FIG. 1A is an overall configuration view of a turbine rotor blade to which a build-up welding method according to an embodiment is applied, and FIG. 1B is an enlarged view showing the tip of the turbine rotor blade before and after build-up welding.

FIG. 2 is a partially enlarged cross-sectional view showing a build-up welded portion at the tip of the turbine rotor blade shown in FIG. 1B.

FIG. 3 is a configuration view of a general steam turbine.

### DETAILED DESCRIPTION

The present invention has been made in view of the problems described above, and it is an object of the present invention to provide a build-up welding method and a structural material therefor that are capable of suppressing erosion caused by liquid droplets and achieving a short operation period and cost reduction.

To solve the above-mentioned problems, according to an embodiment, a build-up welding method for a structural material used in an erosive environment includes removing a portion exposed to the erosive environment from the structural material, and forming a hard layer in a portion of the structural material, from which the portion exposed to the erosive environment is removed, the hard layer being formed by short circuiting transfer gas metal arc welding using a solid wire with a hardness of HV 400 or more. Further, according to an embodiment, a structural material includes a hard layer and an interlayer formed by the build-up welding method according to the embodiment of the present invention at a portion of the structural material that is exposed to an erosive environment.

According to the build-up welding method of the embodiment, the erosion of a structural material such as a turbine blade, which is caused by liquid droplets, can be suppressed, and a short operation period and cost reduction can be achieved.

To efficiently perform build-up welding using Stellite in a short period of time, it is necessary to control a welding heat input amount to be small in order to prevent carbon contained in a Stellite layer from being diluted and to prevent cracks caused by high-temperature welding. The inventors have found that a heat input amount can be appropriately controlled by implementing gas metal arc welding, in which droplet transfer is performed by short circuiting transfer, (hereinafter, referred to as "short circuiting transfer gas metal arc welding").

The short circuiting transfer gas metal arc welding is performed by digital control of a welding power source therefor, and has a very small level of weld penetration, compared with gas metal arc welding using spray transfer or globular transfer as a transfer form of droplets. Therefore, the following facts have been confirmed by verification tests; one fact is that a dilution ratio at which a matrix and weld metal are mixed is very small, and the other one is that a thermally affected portion in the vicinity of the weld metal portion is very small.

Further, the inventors have performed welding tests in which the tip of a turbine blade specimen is cut off_{;} and a welding power source for the short circuiting transfer gas metal arc welding and a solid wire made of a hard material with a hardness of HV 400 or more are used to replace a part of the blade shape with a Stellite layer or the like by build-up welding. As a result, the inventors have confirmed the following: welding can be performed without causing cracking of a solid wire made of Stellite, which can suppress erosion of a turbine blade that would otherwise be caused by liquid droplets.

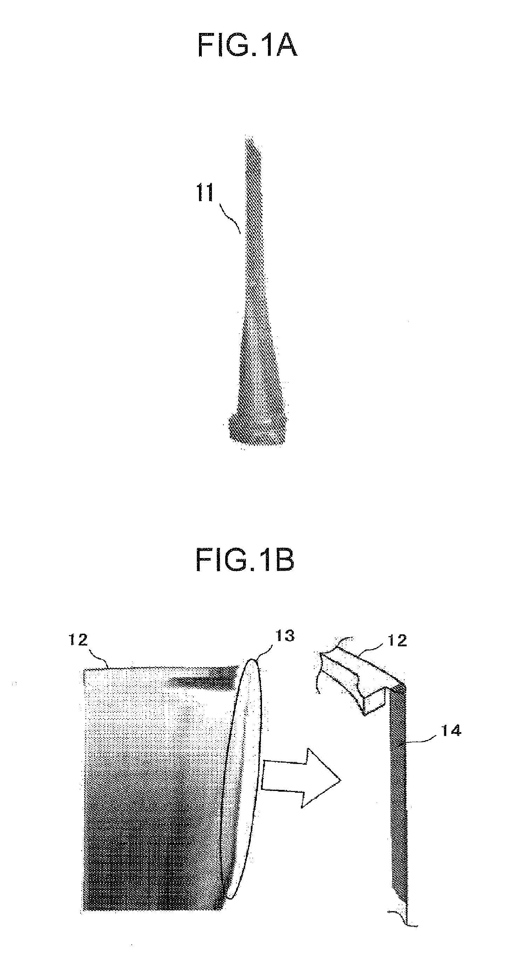

Hereinafter, an example in which a build-up welding method according to an embodiment is applied to a turbine rotor blade (moving blade) will be described with reference to the drawings. F1G. 1A is an overall configuration view of a turbine rotor blade to which a build-up welding method according to this embodiment is applied. FIG. 1B is an enlarged view showing the tip of the turbine rotor blade before and after build-up welding. Further, FIG. 2 is a partially enlarged cross-sectional view showing a build-up welded portion at the tip of the turbine rotor blade shown in FIG. 1B. As shown in FIG. 1A and FIG. 1B, a blade leading edge 13 is formed at a tip 12 of a turbine rotor blade 11. As shown in FIG. 1B, a part of the blade leading edge 13 is cut off before being subjected to build-up welding, and such a portion is subjected to build-up welding so that a build-up welded part 14 is formed in the blade leading edge 13. Further, as shown in FIG. 2, a hard layer 15 is formed at the tip 12 of the turbine rotor blade 11 with the interlayer 16 6 interposed therebetween.

Subsequently, a build-up welding method according to the embodiment will be described. The turbine rotor blade according to the embodiment is made of a 15Cr-6.5Ni-1.5Cu-Nb-Fe alloy. In other words, the turbine rotor blade is made of iron-base precipitation hardened steel.

On the turbine rotor blade, the build-up welding is performed in the following procedure. First, before the build-up welding is performed, a portion of the blade leading edge 13, having height of 70% or more of an effective blade portion, is cut off by about 10 mm or more at the tip 12 of the turbine rotor blade 11 (FIG. 1B). The cut-off portion is a portion having a large blade peripheral speed and susceptible to erosion caused by liquid droplets.

Next, a build-up welded part 14 is formed in the blade leading edge 13, from which the portion susceptible to erosion caused by liquid droplets has been cut off in the previous process, by short circuiting transfer gas metal arc welding. As shown in FIG. 2, the build-up welded part 14 is formed by, for example, build-up welding the hard layer 15 made of Stellite and the interlayer 16 made of a nickel base alloy material having an austenite structure in the blade leading edge 13 (tip 12) by the short circuiting transfer gas metal arc welding.

The interlayer 16 is made of a nickel base alloy that does not form a solid solution of carbon, and prevents carbon contained in Stellite from being diluted and simultaneously relieves a large residual stress at the Stellite build-up portion. The interlayer 16 can be laminated by the short circuiting transfer gas metal arc welding, similar to the hard layer 15 made of Stellite. The hardness of the interlayer 16 is desirably HV 300 or less. It should be noted that in this embodiment, Inconel 625 with a hardness of HV 260 is used.

Regarding execution conditions of the welding, it is desirable to perform the welding at a welding heat input of 3,000 J/cm or less in order to prevent dilution of carbon described above and reduce a risk of hot cracking. Further, the build-up welding is performed on a welding material of 20 g or more per one minute.

In the short circuiting transfer gas metal arc welding, welding wires are required to be successively supplied, and solid wires are necessary. In this embodiment, solid wires formed of a hard material with a hardness ofHV 400 or more, such as Satellite No.6, is used.

When the build-up welding was performed using the hard solid wires by the short circuiting transfer gas metal arc welding at a welding heat input of 3,000 J/cm or less for 20 g per minute or more, it was found that carbon contained in Stellite could be prevented from being diluted and a Stellite hard layer and an interlayer could be formed without causing hot cracking.

As described above, the portion susceptible to erosion caused by liquid droplets, such as a blade leading edge of a turbine rotor blade, is replaced with a hard material by the build-up welding method according to this embodiment, with the result that the influence by the erosion can be suppressed and the blade can last more longer.

It should be noted that although the precipitation hardened stainless steel is used as a base material of the turbine rotor blade in this embodiment, the same build-up welding can also be performed on martensitic stainless steel. Further, as a matter of course, the build-up welding can also be performed on turbine stator blades.

Further, although the build-up welding is performed at the stage at which the turbine blades are produced in this embodiment, the build-up welding can be applied to a blade leading edge of a turbine blade that is already driven and eroded. The execution method is the same as that when the turbine blades are produced, and performed by cutting off an eroded portion and build-up welding the portion by the short circuiting transfer gas metal arc welding.

Further, the short circuiting transfer gas metal arc welding implemented in this embodiment is hardly restricted by a welding position. Therefore, the build-up welding can be performed without detaching the turbine blade from the turbine rotor at a time of actual repair welding or repair operation.
This repair operation can be performed without affecting the schedule of the actual repair operation, which becomes a great advantage of the present invention.

Hereinabove, according to the embodiment of the present invention, the build-up welding is performed by the short circuiting transfer gas metal arc welding using the hard solid wires so that the build-up welding can be performed at a low welding heat input amount, and it is possible to prevent carbon contained in Stellite from being diluted and also form a hard layer made of Stellite and an interlayer without causing hot cracking. Accordingly, erosion caused by liquid droplets can be suppressed, and a short welding operation period and cost reduction can be achieved.

It should be noted that the present invention is not limited to the embodiment described above, and any modifications and changes can be made without departing from the range of the present invention. For example, the present invention is applied to the turbine blade in the embodiment described above, but it can be used for countermeasures against erosion of Colmonoy and other members such as impellers for pumps.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A build-up welding method for a structural material used in an erosive environment, comprising:
removing a portion exposed to the erosive environment from the structural material; and
forming a hard layer in a portion of the structural material, from which the portion exposed to the erosive environment is removed, the hard layer being formed by short circuiting transfer gas metal arc welding using a solid wire with a hardness ofHV 400 or more.

2. The build-up welding method according to claim 1. wherein the solid wire is made of Stellite.

3. The build-up welding method according to claim 1, further comprising
forming an interlayer with a hardness of HV 300 or less by the short circuiting transfer gas metal arc welding in the portion of the structural material, from which the portion exposed to the erosive environment is removed, the hard layer being formed on the interlayer.

4. The build-up welding method according to claim 1, wherein the short circuiting transfer gas metal arc welding is performed at a welding heat input amount of 3,000 J/cm or less and at a welding amount of 20 g per minute or more.

5. The build-up welding method according to claim 1, wherein the structural material is precipitation hardened stainless steel.

6. The build-up welding method according to claim 3, wherein the interlayer is made of a nickel base alloy material having an austenite structure.

7. A structural material, comprising a hard layer formed by the build-up welding method according to claim. 1 at a portion of the structural material that is exposed to an erosive environment.
